# EUROPEAN PATENT APPLICATION

(11) **EP 1 225 346 A1**
(43) Date of publication of application: **24.07.2002**
(21) Application number: 01300554.1
(22) Date of filing: 22.01.2001
(51) Int. Cl.: F16B 35/04

(54) **Fastening device**

(71) Applicant: McKechnie Specialist Products Limited, Aldrige, Walsall, West Midlands WS9 8DS (GB)
(72) Inventor: Lambert, Anthony James, Guildford, Surrey GU1 1YH (GB)
(74) Representative: Haley, Stephen

(57) **Abstract**

A fastening device for engagement, in use, in a threaded bore (13) comprises a stud (10) and a pawl (17), pivotably mounted on the stud, and having a retracted position (24) in which the stud is slidable, in use, within the bore and an extended position (25) in which, in use, the pawl engages with the bore, the pawl having, on its engaging surface, at least one rib (22) for engagement with the threaded bore. Upon insertion of the stud in use, the pawl engages with the threaded bore to retain the stud in the bore. Upon rotation, the stud is tightened.

## Description

This invention relates to a fastening device and, in particular, to a fastening device which can be inserted easily into a threaded bore.

There are a number of applications, such as when working in restricted space or in hard to reach places, in which problems with fastening occur. For example, when inserting a fixing device into a difficult to reach location, it is important that the fastening device can be inserted quickly and simply to ensure that the connection is securely made and with minimal likelihood of the fixing device being dislodged before insertion is completed.

It is clearly advantageous to have a fixing device which is simple to operate and which allows the fixing device to be quickly and easily inserted. However, at the same time, the device must provide sufficient fastening strength to prevent it working loose due to vibrations or shock loading and to fasten securely. Furthermore, both in terms of reliability and manufacturing costs, it is beneficial to provide a fastening device which has a minimal number of components and which is simple to manufacture.

The aim of the present invention is to provide a fastening device which overcomes some of the above problems.

According to the present invention, there is provided a fastening device for engagement, in use, in a threaded bore, the device comprising:
a stud;
a pawl, attached to the stud, and having a retracted position in which the stud is slidable, in use, within the bore and an extended position in which, in use, the pawl engages with the bore, the pawl having, on its engaging surface, at least one rib for engagement with the threaded bore;
wherein, upon insertion of the stud in use, the pawl engages with the threaded bore to retain the stud in the bore and, upon rotation, the stud is tightened in the bore.

Thus, the present invention provides a fastening device which is simple to insert and which requires only minimal rotation in order to fully tighten the stud.

The device may include more than one pawl, for example, a pair of opposing pawls.

Preferably, the stud is also provided with protrusions over at least part of its length for engagement, in use, with the threaded bore as this will ensure that the fastening strength is greatly increased. The protrusions may form a whole or partial screw thread.

The fastening device may be provided with biassing means for urging the pawl towards its extended position such that, when inserting the fastening device, the pawl acts as a ratchet to ensure that the fastening device cannot easily fall out of the threaded bore and provides accurate positioning of the stud prior to tightening.

The pawl may be pivotably mounted on the stud or may be formed integrally with the stud.

The fastening device may also be provided with release means which, when activated, urge the pawl to its retracted position so that the stud can be removed from the bore with minimal effort.

Preferably, the pawl is axially, slidably mounted on the stud to ensure that the rib(s) on the pawl and the protrusions on the stud are aligned.

Preferably, the stud is shaped to facilitate the rotation of the stud, for example, having a slot in its upper surface or having the head rectangularly or hexagonally shaped.

One embodiment of the present invention will now be described with reference to the accompanying drawings in which:
Figure 1 is a partial cross sectional rear view of a fastening device according to the present invention when fully inserted;
Figure 2 is a partial cross sectional side view through a fastening device according to the present invention during insertion;
Figure 2a is a cross sectional view through the fastening device of Figure 2;
Figure 3 shows a partial cross sectional side view through a fastening device according to the present invention when fully inserted;
Figure 4 is an enlarged partial cross sectional view showing the pawl mechanism;
Figures 5a and 5b show partial cross sectional views through a device having a release mechanism; and
Figure 6 is a cross sectional view through another device according to the present invention.

Referring to the Figures, a stud 10 is provided for fixing a plate 11 to a body 12 in which a threaded bore 13 has been formed. The stud 10 comprises a threaded section 14 and a stud head 15.

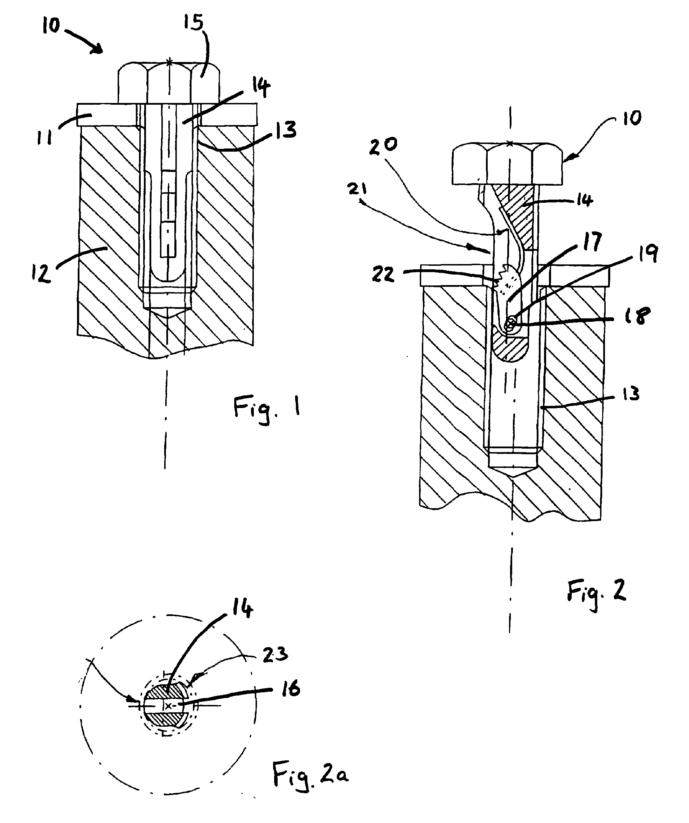

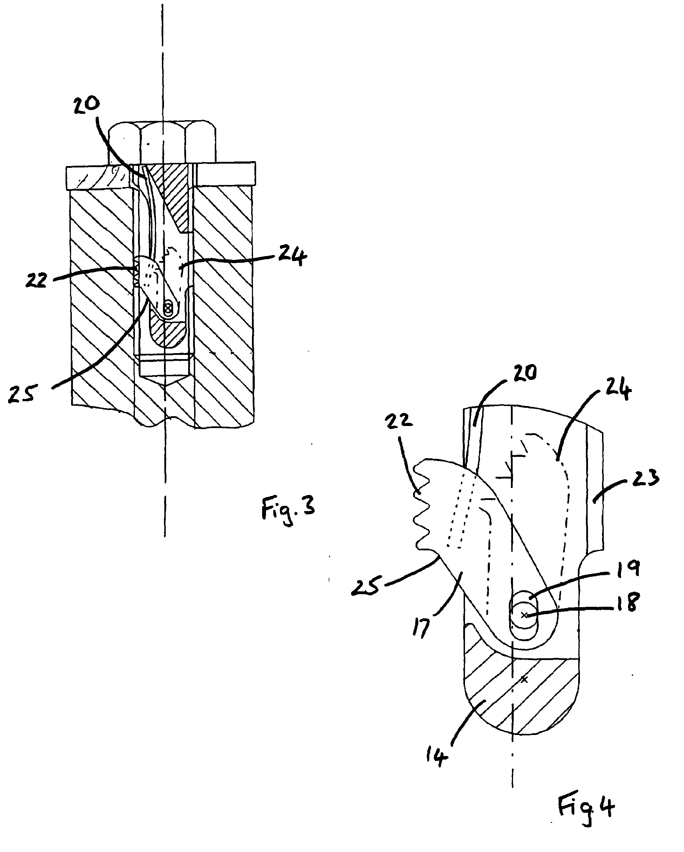

As can be more clearly seen in Figures 2a, 3 and 4, the threaded section 14 is provided with a slot 16 in which a pawl 17 is slidably and pivotably mounted on a pivot 18. The pawl 17 is provided with an elongate slot 19 which permits relative axial movement of the pawl 17 and the threaded section 14. The pawl 17 is biassed by a spring element 20 from a retracted position 24, (shown in solid line in Figure 2 and in dotted line in Figures 3 and 4) to an extended position 25 (shown in solid line in Figures 3 and 4).

A portion 21 of the threaded section is cut away to allow the stud 10 to be pushed into the threaded bore 13. On initial entry to the threaded bore, the pawl, which is spring biassed towards its extended position, acts a ratchet to prevent the stud from inadvertently being removed from the threaded bore 13. Once the stud has been fully inserted, the biassing effect of the spring element 20 urges the pawl to pivot into its extended position in which the ribs 22 engage with the bore 13. At this stage, the stud should require a maximum of one rotation to tighten it securely. As the stud is rotated to tighten, the pawl is driven outward and down by the helix of the thread and the tension between the thread and the stud is increased, as with a standard male/female thread configuration. The slot 19 in the pawl allows for any mismatch between the ribs on the pawl and the fixed thread 23 on the opposite side of the stud to be accommodated.

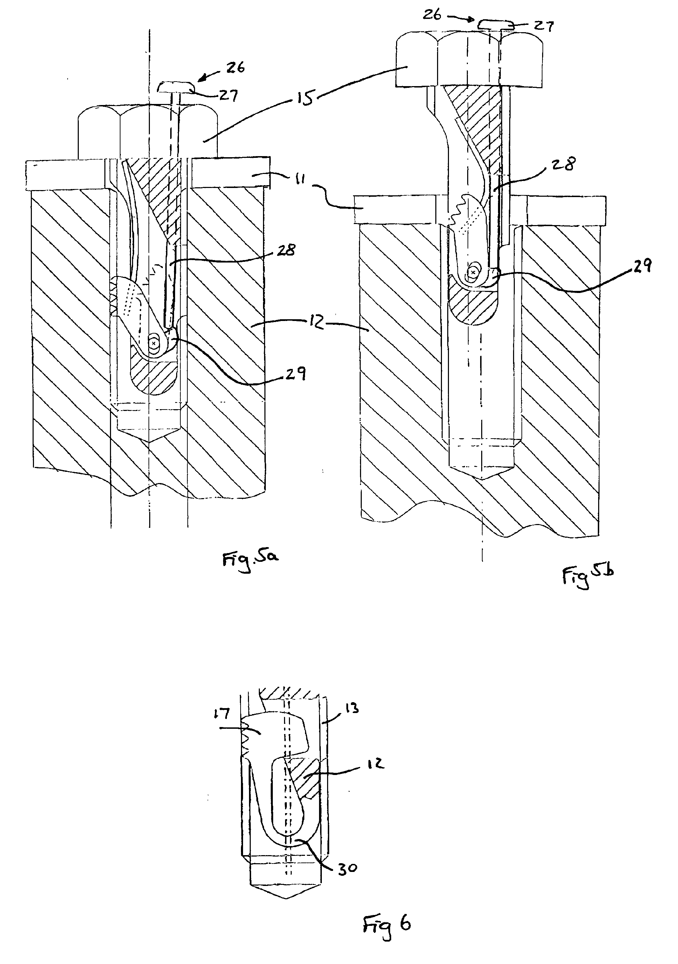

A further feature, shown in Figures 5a and 5b, is a quick release mechanism 26 which can be operated to avoid the need to unscrew the stud fully in order to extract it from the bore. The quick release mechanism 26 comprises a button 27 projecting on a rod 28 from the stud head 15, and engaging with a seat 29 on the pawl 17, to allow it to be moved, once the stud tension has been released, towards its retracted position such that it becomes disengaged from the bore 13. The stud can then be removed from the bore without further rotation.

In Figure 6, an alternative embodiment is shown. In this arrangement, the pawl 17 is formed integrally with the body 12. The biassing effect is provided by the U shaped connecting part 30 which joins the pawl 17 with the body 12.

## Claims

1. A fastening device for engagement, in use, in a threaded bore (13), the device comprising:
a stud (10);
a pawl (17), attached to the stud, and having a retracted position (24) in which the stud is slidable, in use, within the bore (13) and an extended position (25) in which, in use, the pawl (17) engages with the bore (13), the pawl having, on its engaging surface, at least one rib (22) for engagement with the threaded bore;
wherein, upon insertion of the stud (10) in use, the pawl (17) engages with the threaded bore to retain the stud in the bore (13) and, upon rotation, the stud is tightened in the bore.

2. A device according to claim 1, wherein a maximum of one rotation of the stud (10) is required to tighten the device fully.

3. A device according to either claim 1 or claim 2, wherein the stud (10) has protrusions (23) for engagement, in use, with the threaded bore (13).

4. A device according to claim 3, wherein the protrusions (23) form a screw thread.

5. A device according to any one of the preceding claims, further comprising a biassing element (20) to bias the pawl (17) to its extended position (25).

6. A device according to any one of claims 3 to 5, wherein the pawl (17) is axially slidably mounted on the stud (10) to ensure the rib(s) 22 on the pawl and the protrusions (23) on the stud (10) are aligned.

7. A device according to any one of the preceding claims, wherein the pawl (17) is pivotably mounted on the stud (10).

8. A device according to any one of claims 1 to 7, further comprising release means (26) which, when activated, urge the pawl (17) to its retracted position so that the stud (10) can be removed.

9. A device according to claim 8, wherein the release means (26) comprises a seat (29) formed on the pawl (17) on the opposite side of the pivot to the rib (22) and a rod (28) extending through the stud (10) such that, when pushed, the rod engages with the seat to urge the pawl to its retracted position (24).

10. A device according to any one of claims 1 to 6, wherein the pawl (17) is integral with the stud (10).

11. A device according to any one of the preceding claims, further comprising at least one additional pawl (17).
